Europäisches Patentamt

European Patent Office

Office européen des brevets

(19)

(11) EP 1 120 382 A2

(12) **EUROPEAN PATENT APPLICATION**

(43) Date of publication:
01.08.2001 Bulletin 2001/31

(51) Int Cl.$^7$: **C03B 37/014**, G02B 6/18

(21) Application number: 01250028.6

(22) Date of filing: 26.01.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 28.01.2000 JP 2000020773
31.01.2000 JP 2000021239
21.04.2000 JP 2000120877

(71) Applicant: **SHIN-ETSU CHEMICAL CO., LTD.**
**Chiyoda-ku Tokyo (JP)**

(72) Inventors:
- **Abe, Jun**
  **Annaka-shi, Gunma (JP)**
- **Mantoku, Nobuyasu**
  **Annaka-shi, Gunma (JP)**
- **Makikawa, Shinji**
  **Annaka-shi, Gunma (JP)**
- **Ejima, Seiki**
  **Kita-gun, Kagawa (JP)**

(74) Representative: **Pfenning, Meinig & Partner**
**Mozartstrasse 17**
**80336 München (DE)**

(54) **Glass preform and optical fibre and method of manufacturing the preform**

(57) A method for manufacturing a glass base material, which is a base material of an optical fiber, comprising: forming a core of the glass base material; forming the core includes: accumulating glass particles (12) on a starting rod (16) to form a porous glass soot (10); sintering the porous glass soot (10) in an atmosphere of mixed gas that contains fluorine-compound gas to form a GI type refractive index profile, the refractive index of which gradually decreases with a distance from a center of the core; and forming a clad of the glass base material around the core.

EP 1 120 382 A2

# Description

This patent application claims priority based on Japanese patent applications, 2000-020773 filed on January 28, 2000, 2000-021239 filed on January 31, 2000, and 2000-120877 filed on April 21, 2000, the contents of which are incorporated herein by reference.

## BACKGROUND OF THE INVENTION

### 1. Field of the Invention

This invention relates to a method for manufacturing glass base material, a glass base material, and an optical fiber.

### 2. Description of the Related Art

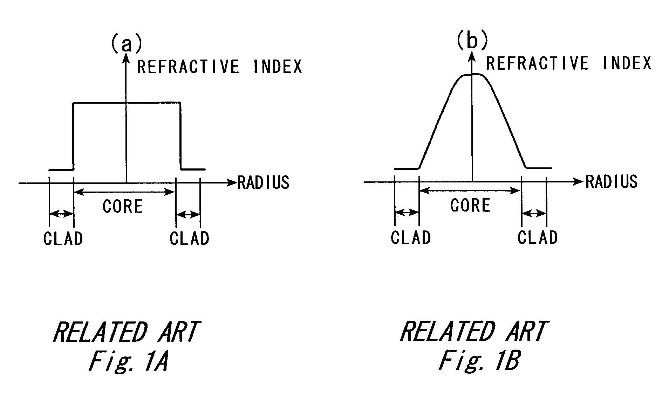

Figs. 1A and 1B show a refractive index profile of two types of optical fibers used for transmitting a light of a YAG laser (Yttrium-Aluminum-Garnet laser). Fig. 1A shows a refractive index profile of an SI type (Step Index type) optical fiber. Fig. 1B shows a refractive index profile of a GI type (Graded Index type) optical fiber.

As shown in Fig. 1A, the refractive index of the SI type optical fiber changes in stepped shape at the boundary between a core and a clad. The core has a uniform refractive index. The clad also has a uniform refractive index, which is lower than the refractive index of the clad. The laser light propagates in an optical fiber by performing a total internal reflection at an interface of the core and the clad.

As shown in Fig. 1B, the refractive index of the GI type optical fiber is highest at the center of the core. The refractive index gradually and continuously decreases with a distance from the center of the core until the boundary between the core and the clad. Because the GI type optical fiber has a continuous refractive index, the laser light propagates in an optical fiber by meandering around the central axis of the core.

The above mentioned difference of the form of the propagation of the laser light greatly influences the beam strength distribution or power density profile of the laser light after passing through the optical fiber.

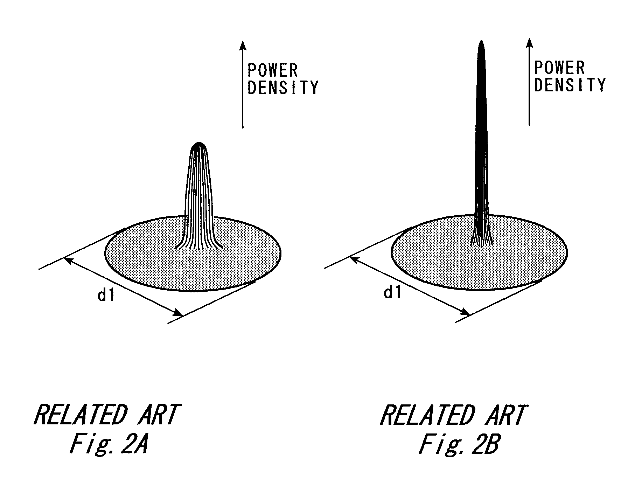

Fig. 2A shows a beam strength distribution of the laser light after passing through the SI type optical fiber. Fig. 2B shows a beam strength distribution of the laser light after passing through the GI type optical fiber. As shown in Fig. 2A and Fig. 2B, the laser light that has passed through the GI type optical fiber has a beam strength twice as large as the beam strength of the light that has passed through the SI type optical fiber at the center of the core. The GI type optical fiber relatively preserves the original beam strength distribution of the incident light input to the GI type optical fiber well. Therefore, the laser beam that passed through the GI type optical fiber has a superior cutting characteristic than the fusing characteristic of the laser beam that passed through the SI type optical fiber.

That is, when using the light that passed through the optical fiber for welding, the depth of fusion obtained by the light that passed through the GI type optical fiber is deeper than the light that passed through the SI type optical fiber. For example, the light that passed through the GI type optical fiber can weld an aluminum alloy, while the light that passed through the SI type optical fiber cannot weld an aluminum alloy. Because the GI type optical fiber has superior characteristics, the demand for the GI type optical fiber increases.

However, when comparing the GI type optical fiber with the SI type optical fiber, the GI type optical fiber is difficult to manufacture because it is difficult to control the refractive index profile during manufacturing of the GI type optical fiber. Therefore, the time taken to manufacture the GI type optical fiber is larger than the time taken to manufacture the SI type optical fiber. Thus, the productivity for manufacturing the GI type optical fiber is lower than the productivity for manufacturing the SI type optical fiber.

The conventional GI type optical fiber is manufactured by adding a germanium to a core material to increase the refractive index larger than a refractive index of pure quarts to form a GI type refractive index profile. However, the strength against the light of the germanium doped GI type optical fiber is lower than that of the SI type optical fiber. Thus, if using the germanium doped GI type optical fiber for a high power YAG laser, the strength of the optical fiber can deteriorate. Thus, an enormous power from the light is passed through the optical fiber when the light of the YAG laser is input to the optical fiber. Therefore, there might be a danger of breaking an optical fiber when passing the light of the YAG laser through the optical fiber.

## SUMMARY OF THE INVENTION

Therefore, it is an object of the present invention to provide an apparatus for glass base material manufacturing and a method for glass base material manufacturing which overcomes the above issues in the related art. This object is achieved by combinations described in the independent claims. The dependent claims define further advantageous and exemplary combinations of the present invention.

According to the first aspect of the present embodiment, a method for manufacturing a glass base material, which is a base material of an optical fiber, comprising: forming a core of the glass base material; forming the core including: accumulating glass particles on a starting rod to form a porous glass soot; sintering the porous glass soot in an atmosphere of mixed gas that contains fluorine-compound gas to form a GI type refractive index profile, the refractive index of which gradually decreases with a distance from a center of the core; and forming a clad of the glass base material around the core.

The sintering of the porous glass soot may control a fluorine-compound gas content in the atmosphere of the mixed gas that contains fluorine-compound gas and a sintering speed for sintering the porous glass soot to form the GI type refractive index profile. The method may further comprise: recognizing a density of the porous glass soot; determining the fluorine-compound gas content in the mixed gas based on the recognized density of the porous glass soot; and determining the sintering speed based on the recognized density of the porous glass soot; wherein: the sintering sinters the porous glass soot according to the determined fluorine-compound gas content in the mixed gas and the determined sintering speed.

The accumulating of the glass particles may form the porous glass soot having a density in a range from 0.15 $g/cm^3$ to 1.0 $g/cm^3$. The accumulating of the glass particles may form the porous glass soot having a density in a range from 0.15 $g/cm^3$ to 0.4 $g/cm^3$. The sintering of the porous glass soot may control the fluorine-compound gas content in the atmosphere of the mixed gas within a range from 0.1 Vol% to 10 Vol%. The sintering of the porous glass soot may control the sintering speed within a range from 5 mm/min to 10 mm/min.

The accumulating of the glass particles may hydrolyze and accumulate silicon tetrachloride on the starting rod. The forming of the core may further include forming an inner core, a refractive index of which is substantially the same as a refractive index of pure quartz, inside the outer core.

According to the second aspect of the present embodiment, a glass base material, which is a base material of an optical fiber, comprising: a fluorine-doped core which has a GI type refractive index profile that gradually decreases with a distance from a center of the fluorine-doped core; and a fluorine-doped clad having a substantially uniform refractive index profile.

The glass base material may further comprise: an inner core, a refractive index of which is substantially the same as a refractive index of pure quartz, inside the fluorine-doped outer core. The highest refractive index of the fluorine-doped outer core may be smaller than the refractive index of the inner core. A refractive index of the fluorine-doped clad may be smaller than the lowest refractive index of the fluorine-doped outer core. An absolute value of a refractive index difference between the inner core and the pure quartz may be substantially 0.001 or smaller.

According to the third aspect of the present embodiment, an optical fiber, comprising: a fluorine-doped core which has a GI type refractive index profile that gradually decreases with a distance from a center of the fluorine-doped core; and a fluorine-doped clad having a substantially uniform refractive index profile.

The optical fiber may further comprise: an inner core, a refractive index of which is substantially the same as a refractive index of pure quartz, inside the fluorine-doped outer core. The highest refractive index of the fluorine-doped outer core may be smaller than the refractive index of the inner core. A refractive index of the fluorine-doped clad may be smaller than the lowest refractive index of the fluorine-doped outer core. An absolute value of a refractive index difference between the inner core and the pure quartz may be substantially 0.001 or smaller.

This summary of the invention does not necessarily describe all necessary features so that the invention may also be a sub-combination of these described features.

BRIEF DESCRIPTION OF THE DRAWINGS

Fig. 1 shows a refractive index profile of two types of an optical fiber.
Fig. 2 shows a beam strength distribution of the laser light after passing through an optical fiber.
Fig. 3 shows an apparatus for manufacturing porous glass soot.
Fig. 4 shows an apparatus for sintering the porous glass soot to form a core.
Fig. 5 shows a flow chart of manufacturing the glass base material of the present embodiment shown in example 1 and example 2.
Fig. 6 shows a refractive index profile of a core manufactured in example 1.
Fig. 7 shows a refractive index profile of the glass base material manufactured in example 1.
Fig. 8 shows the refractive index profile of the core manufactured in the comparative example 2.
Fig. 9 shows the refractive index profile of the core manufactured in example 3.
Fig. 10 shows a table that shows the results of the examples 1 and 2, and the comparative examples 1 to 7 shown above.
Fig. 11 shows an embodiment of a glass base material having a pseudo GI type refractive index profile.
Fig. 12 shows a refractive index profile of the core manufactured in example 3.
Fig. 13 shows the refractive index profile of the core manufactured in example 4.
Fig. 14 shows a flow chart of manufacturing the glass base material of the present embodiment shown in example 3 and example 4.

DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

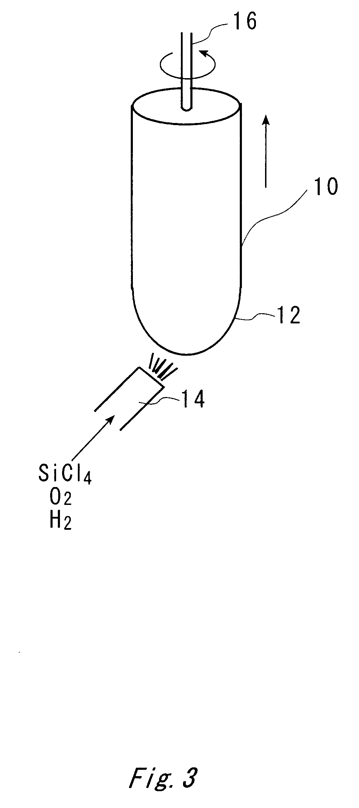

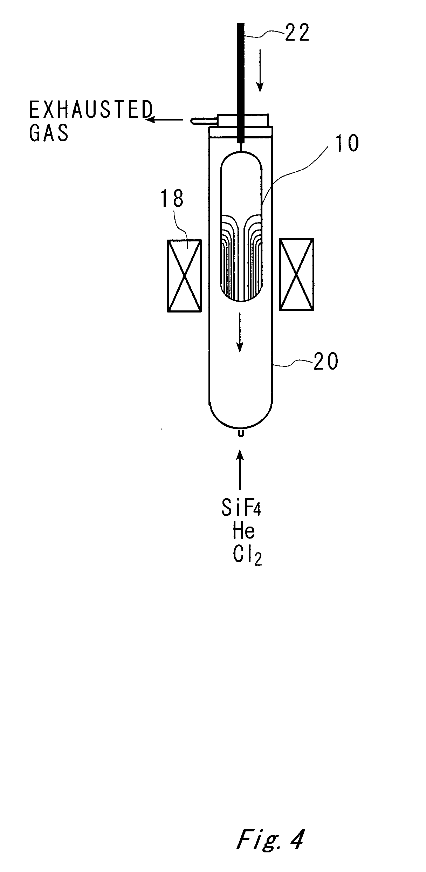

Fig. 3 and Fig. 4 show an apparatus for manufacturing a glass base material of the present embodiment. A glass base material is a base material of an optical fiber. The optical fiber is manufactured by drawing a glass base material. In the same style as an optical fiber, the glass base material also has a core and a clad. A core and a clad of the glass base material are manufactured using the apparatus shown in Fig. 3 and Fig. 4. Fig. 3 shows an apparatus for manufacturing porous glass soot. A core can be obtained by sintering the porous glass soot. In Fig. 3, a VAD method (Vapor-phase Axial Deposition method) is used for manufacturing the porous glass soot. However, an OVD method (Outside Vapor Deposition method) can also be used for manufacturing the porous glass soot. First, the method for manufacturing the core of the glass base material will be explained below.

The apparatus of the VAD method shown in Fig. 3 has a starting rod 16 and a burner 14. A Halogen silicon compound is provided to the burner 14 as a raw material gas. As examples of the halogen silicon compound, included are $SiCl_4$, $HSiCl_3$, $H_2SiCl_2$, and so on. Silicon tetrachloride ($SiCl_4$,) is especially preferable to be used as a raw material gas because the tetrachloride can easily control the density of the porous glass soot within a predetermined range.

A carrier gas is also provided to the burner 14 together with the raw material gas. As examples of the carrier gases, they are inert gases such as Ar and $N_2$, a combustible gas such as $H_2$, and a combustion supporting gas such as $O_2$. By providing the raw material gas and a carrier gas to the burner 14, the raw material gas is hydrolyzed by the oxyhydrogen flame generated by the combustible gas and a combustion supporting gas. This hydrolyzing process generates glass particles of a silicon oxide.

The burner 14 ejects the generated glass particles 12 onto the starting rod 16 to accumulate the glass particles 12 on the starting rod 16 to form a porous glass soot 10. The starting rod 16 is elevated as the accumulation process progresses. Because the rotation rod 16 is rotated and elevated, a cylindrical shaped porous glass soot 10 is formed on the rotation rod 16.

The density of the porous glass soot is then measured. To measure the density of the porous glass soot 10, a length, a weight, and a diameter of the porous glass soot are measured. The density of the porous glass soot can then be calculated by the following equation:

$$\rho = W / (\pi/4 \times D^2 \times L)$$

where $\rho$ denotes the density of the porous glass soot 10; W denotes the weight of the porous glass soot 10; D denotes the diameter of the porous glass soot 10; and L denotes the length of the porous glass soot 10.

If the porous glass soot 10 is manufactured according to the predetermined process so that the density of the porous glass soot 10 is recognized beforehand, this density measuring process can be abbreviated.

The density of the porous glass soot 10 is preferably formed in a range from 0.15 $g/cm^3$ to 1.0 $g/cm^3$ to form a core having a GI type refractive index profile. More preferably, the density of the porous glass soot 10 is controlled in a range from 0.15 $g/cm^3$ to 0.4 $g/cm^3$. If the density of the porous glass soot 10 is less than 0.15 $g/cm^3$, the porous glass soot 10 is too soft which means that the porous glass soot 10 cannot be formed in one body. Also, the amount of fluorine doped into the porous glass soot 10 is too large which means that the uniform refractive index profile is formed. Therefore, the GI type refractive index profile cannot be formed. On the other hand, if the density of the porous glass soot 10 is more than 1.0 $g/cm^3$, it is difficult for the fluorine to be doped into the porous glass soot 10 so that the GI type refractive index profile cannot be formed.

Fig. 4 shows an apparatus for sintering the porous glass soot to form a core. The sintering apparatus has a furnace 20 and a heater 18 provided on'the furnace 20. The porous glass soot 10 is fixed to the bottom of a main rod 22 and installed inside the furnace 20. A gas containing a fluorine compound such as $SiF_4$, $SF_6$, or Freon is provided to the furnace 20 from the bottom of the furnace 20. An inert gas such as He or $Cl_2$ can also be provided to the furnace 20 with the fluorine compound gas. The atmosphere inside the furnace 20 is filled with a gas containing a fluorine compound. The heater 18 heats the porous glass soot 10 inside the furnace 20.

The main rod 22 is gradually lowered toward the bottom of the furnace 20 so that the heater 18 heats the porous glass soot 10 in the atmosphere that contains the fluorine-compound. Therefore, the porous glass soot 10 is gradually sintered and doped with fluorine from the surface toward the inside of the porous glass soot 10. At the same time, the porous glass soot 10 is sintered and doped with the fluorine in an upward direction.

The fluorine-compound gas content inside the furnace 20 and the sintering speed are determined based on the measured density of the porous glass soot 10. Because the density of the porous glass soot 10 influences the amount of fluorine doped into the porous glass soot 10, the most suitable fluorine-compound gas content in the mixed gas and the sintering speed are determined based on the density of the porous glass soot 10.

At this time, the fluorine-compound gas content is determined within a range from 0.1 Vol% to 10 Vol%. Preferably, the fluorine-compound content is determined within a range from 1 Vol% to 10 Vol%. Furthermore, the sintering speed is determined within a range from 5 mm/min to 10 mm/min. For example, if the density of the porous glass soot 10 is from 0.2 $g/cm^3$ to 0.3 $g/cm^3$, the fluorine-compound gas content may be determined to 2 Vol%, the sintering speed may be determined to 7 mm/min, and the sintering temperature may be determined to $1330°C$ to form a GI type refractive index profile.

A fluorine-compound gas content inside the furnace 20 and a sintering speed are controlled during the sintering process of the porous glass soot 10 to a predetermined value. The sintering speed is a passing speed of the porous glass soot 10 through the heater 18.

By controlling the sintering speed within a range from 5 mm/min to 10 mm/min, the amount of fluorine doped into the porous glass soot 10 becomes large at the surface of the porous glass soot 10 and small at the center region of the porous glass soot 10. Therefore, the center region of the porous glass soot 10 is vitrified before being doped with large amount of fluorine, and the surface region of the porous glass soot 10 is vitrified and also doped with a large amount of fluorine. Thus, the refractive index becomes large at the center region of the porous glass soot 10 and small at the surface region of the porous glass soot 10 so that a core having a GI type refractive index profile can be obtained after the sintering process.

By further controlling the fluorine-compound gas content within a range from 0.1 Vol% to 10 Vol%, the center region of the porous glass soot 10 is substantially not doped with fluorine, and the amount of doping gradually increases with the distance from the center of the porous glass soot 10. Thus, the core having a GI type refractive index profile can further be reliably manufactured after the sintering process.

Then, after elongating an obtained core to a predetermined diameter and length as the need arises, the clad is accumulated on the core using the apparatus shown in Fig. 3. That is, in a similar style to the manufacturing process of the core, the glass particles are accumulated around the outside surface of the core to form the porous clad layer. Then, the sintering apparatus shown in Fig. 4 sinters the clad layer.

The clad is formed to have a uniform refractive index, which is substantially the same or lower than the lowest refractive index of the core. The condition of sintering speed lower than 5 mm/min, such as 4 mm/min, is used for sintering the clad. Also, the fluorine-compound gas content is set to be higher than 10 Vol%.

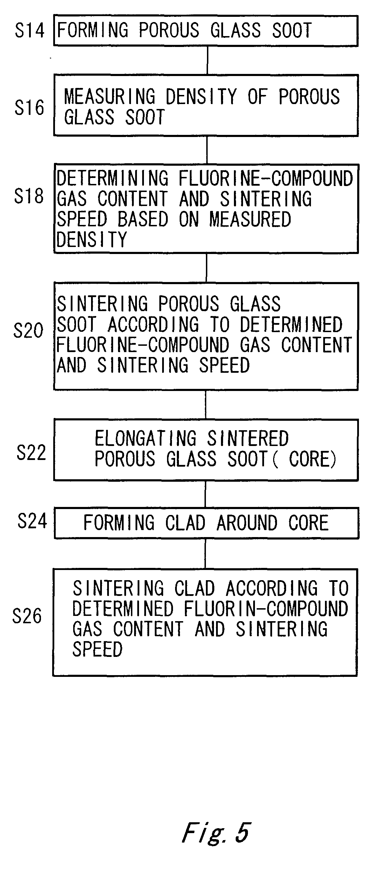

Fig. 5 shows a flow chart of manufacturing the glass base material. First, porous glass soot 10 is formed (S14). Next, the density of the porous glass soot 10 is measured (S16). Then, the fluorine-compound gas content and the sintering speed for sintering the porous glass soot 10 are determined based on the measured density (S18). Then, the porous glass soot 10 is sintered according to the determined fluorine-compound gas content and the determined sintering speed (S20). Next, the sintered porous glass soot is elongated to a predetermined diameter and length (S22). Finally, the clad is sintered (S26) after a clad of the glass base material is formed around the outside surface of the core (S24).

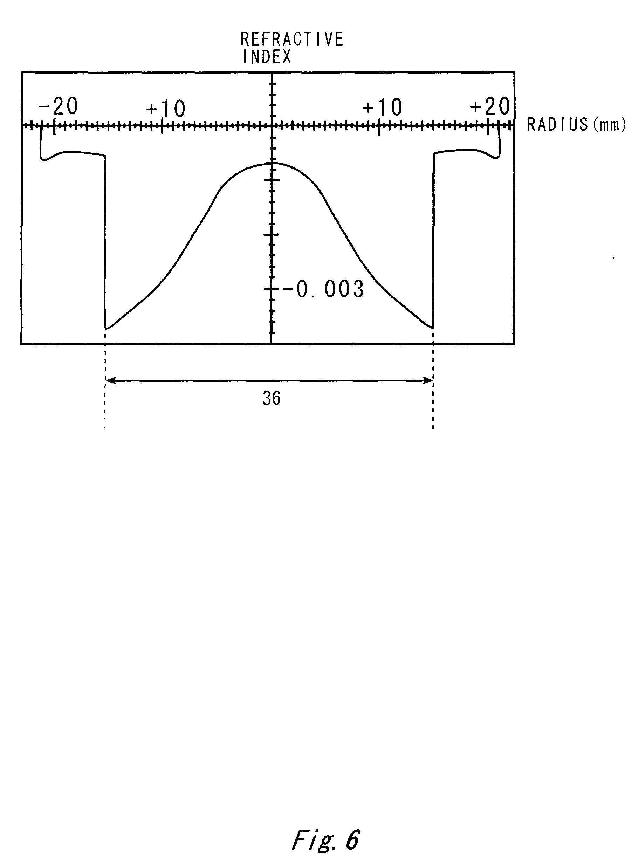

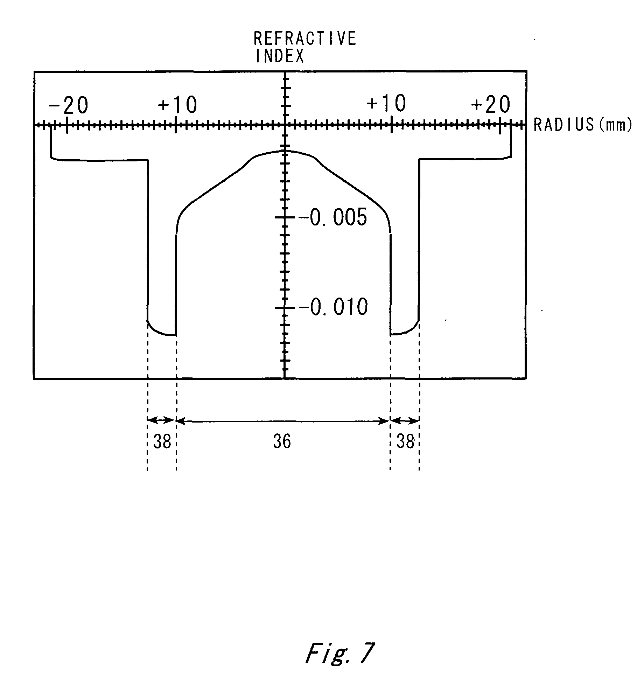

Because the core has a GI type refractive index profile, the light that is passed through the optical fiber, which is obtained by drawing the glass base material having a GI type refractive index profile shown in Fig. 6 and Fig. 7, has a higher beam strength than the beam strength of the light that is passed through the SI type optical fiber.

Furthermore, because fluorine, not germanium, is doped into the core and the clad, the strength against the light of the optical fiber of the present embodiment is stronger than the strength against the light of the optical fiber doped with germanium.

In the following, the present embodiment will be explained in detail using an example and a comparative example, and the present embodiment is not limited by the scope of the description shown below. The measurement of a refractive index profile in the example and the comparative example is performed using the preform analyzer, model P104, of York Technology Ltd. In the following, the refractive index of the vertical axis shown in Fig. 6, 7, 8, 9, 11, and 12 shows the difference of the refractive index between the measuring object and a cell made by pure quarts, which is used for measuring the refractive index.

[Example 1]

Fig. 6 shows a refractive index profile of a core 36 of the glass base material manufactured by the present embodiment. The process for manufacturing the core 36 of the glass base material having a refractive index profile shown in Fig. 6 will be explained below. The core 36 of the glass base material was manufactured using the apparatus shown in Fig. 3 and Fig. 4.

First, porous glass soot 10 was manufactured by the VAD method using the apparatus shown in Fig. 3. The bottom part of the starting rod 16 was exposed to an oxyhydrogen flame from the burner 14. At the same time, silicon tetrachloride ($SiCl_4$), which was used as a raw material, was hydrolyzed by the oxyhydrogen flame to form the glass particles. The glass particles were accumulated onto the starting rod 16 to form porous glass soot 10 while the starting rod 16 was elevated. The density of the manufactured porous glass soot was $0.22$ g/cm$^3$.

Next, the fluorine-compound gas content was determined as 2 Vol%, the sintering speed was determined as 7.0 mm/min, and the sintering temperature was determined as 1330 °C based on the measured density.

Then, the porous glass soot was sintered and doped with fluorine using the sintering apparatus shown in Fig. 4 according to the determined fluorine-compound gas content and the sintering speed. Helium gas and a gas containing a fluorine compound were introduced into the furnace 20. The flow rate of the helium gas was 4.9 L/min, and the flow rate of the gas containing the fluorine compound of $SiF_4$ was 0.1 L/min. The inside of the furnace 20 was filled with an atmosphere of mixed gas, which mixes the helium gas and the gas containing the fluorine compound of $SiF_4$, the fluorine-compound

gas content of which was 2 Vol% in the mixed gas. The porous glass soot 10 was sintered at the sintering speed of 7.0 mm/min and the sintering temperature of 1330 °C. The sintering process vitrified the porous glass soot 10 to be a transparent core 36.

As shown in Fig. 6, the core 36 manufactured by the above-mentioned process had a GI type refractive index profile.

After elongating the core 36 to a predetermined length and a diameter, the glass particles were accumulated around the surface of the core 36 to form a porous clad layer 38. The clad 38 was sintered by the sintering speed condition of 4.0 mm/min. $SiF_4$ gas was introduced to the furnace at a flow rate of 2.0 1/min. A clad 38 having a uniform refractive index was then formed around the core 36. The value of the refractive index of the obtained clad 38, which is substantially uniform and 0.012 smaller than that of the pure quartz, is smaller than the lowest refractive index of the core 36. Then, the fluorine-doped glass base material having a GI type refractive index profile as shown in Fig. 7 was manufactured.

[Example 2]

A core 36 of the glass base material is manufactured according to the same conditions as in example 1 except for the condition of a fluorine-compound gas content, which will be explained below. A helium gas and a gas containing a fluorine compound were introduced into the furnace 20. The flow rate of the helium gas was 4.7 L/min, and the flow rate of the $SiF_4$ gas was 0.3 L/min. Thus, the content of the gas that contains fluorine-compound was 6 Vol%. Then, a core 36 having a good GI type refractive index profile was obtained.

[Comparative Example 1]

A porous glass soot was manufactured by the VAD method. The bottom part of the starting rod was exposed to an oxyhydrogen flame from the burner. At the same time, tetramethoxysilane, which was used as a raw material, was hydrolyzed by the oxyhydrogen flame to become glass particles. The glass particles were accumulated onto the starting rod to form a porous glass soot 10 during the elevation of the starting rod. The density of the obtained porous glass soot had a high value of 0.42 g/cm$^3$ because the calorific value of the tetramethoxysilane was large so that the glass particles were sintered during the accumulation process.

Next, the porous glass soot was sintered according to the condition of 4.0 mm/min of the sintering speed, and 1330 °C of the sintering temperature. The porous glass soot was sintered and doped with fluorine by filling the inside of the furnace with an atmosphere of a fluorine compound gas of $SiF_4$, the fluorine-compound gas content of which was 100 Vol%. During the sintering process, the surface of the porous glass soot was vitrified. However, the center region of the porous glass soot was not vitrified.

The center region of the porous glass soot was not vitrified because the density of the porous glass soot was too high so that the gas containing fluorine compound, $SiF_4$, could not enter into the center region of the porous glass soot. As a result, the temperature of the center region of the porous glass soot does not reach the sintering temperature or the vitrification temperature. Therefore, the center region of the porous glass soot was not sintered.

Because the $SiF_4$ has an effect of decreasing the sintering temperature of the porous glass soot, the temperature of the outer region of the porous glass soot, on which the $SiF_4$ gas reached, became 1330 °C. Thus, the outer region of the porous glass soot was vitrified. On the other hand, the center region of the porous glass soot, into which the $SiF_4$ gas did not reach, could not be vitrified.

[Comparative Example 2]

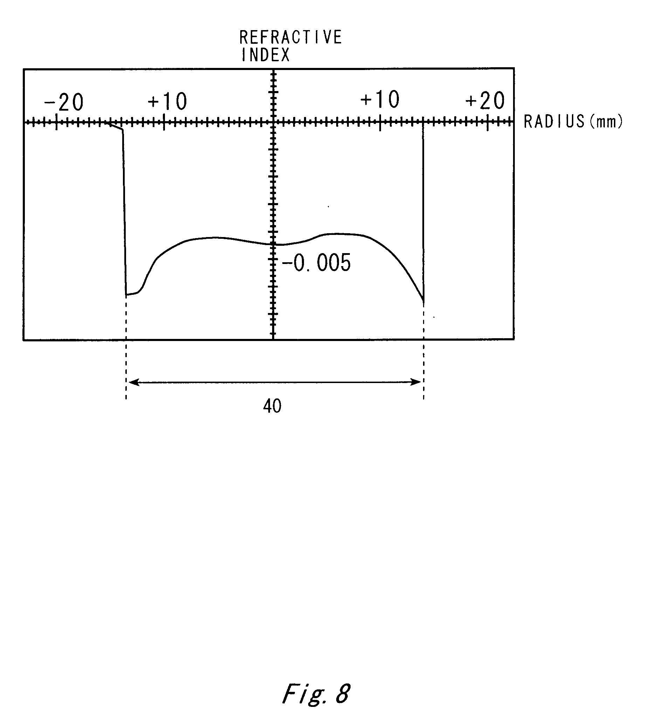

Fig. 8 shows another comparative example of the refractive index profile of the core 40 of the glass base material. The process for manufacturing the core 40 of the glass base material having a refractive index profile shown in Fig. 8 will be explained below.

First, porous glass soot was manufactured by the VAD method. The density of the obtained porous glass soot was substantially 0.20 g/cm$^3$. Next, the porous glass soot was sintered according to the condition of 7.0 mm/min of the sintering speed, and 1330 °C of the sintering temperature. Helium gas and a gas containing fluorine compound were introduced into the furnace 20. The flow rate of the helium gas was 3.25 L/min, and the flow rate of the $SiF_4$ was 1.75 L/min. Thus, the fluorine-compound gas content of the atmosphere of the mixed gas was 35 Vol%. Then, the porous glass soot was sintered and doped with fluorine.

As shown in Fig. 8, because the fluorine-compound gas content was too high, the fluorine was doped into the center region of the core 40 in a large amount so that the refractive index was low for the entire region of the core 40. Therefore, the core having a GI type refractive index profile could not be obtained.

[Comparative Example 3]

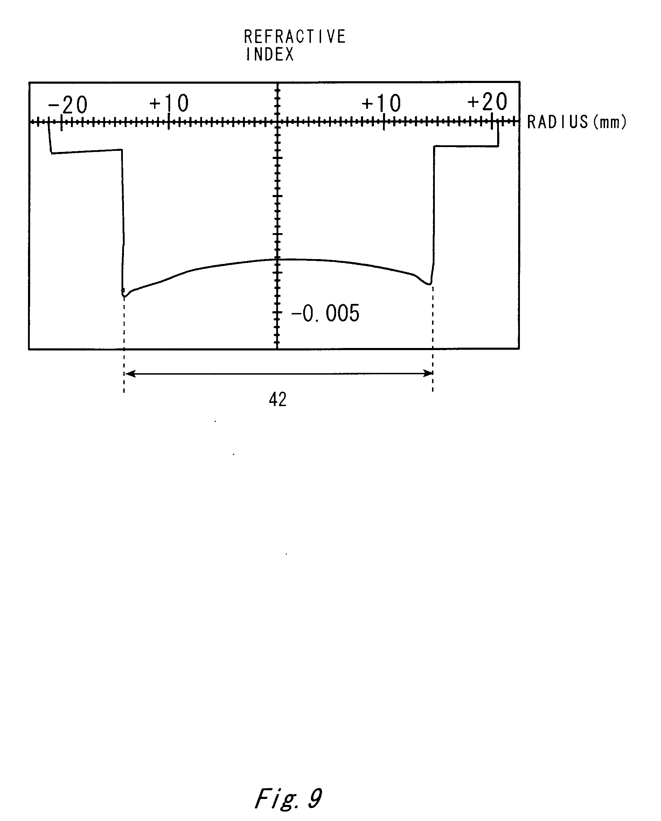

Fig. 9 shows further another comparative example of the refractive index profile of the core 42 of the glass base material. The process for manufacturing the core 42 of the glass base material having a refractive index profile shown in Fig. 9 will be explained below.

A core 42 was manufactured according to the same conditions as in example 1 except for the condition of a sintering speed that was set to be 1.0 mm/min.

As shown in Fig. 9, because the sintering speed was too small, the fluorine was doped into the center portion of the core 42 in a large amount so that the refractive index was low for the entire region of the core 42. Therefore, the core having a GI type refractive index profile could not be obtained.

[Comparative Example 4]

A core of the glass base material was manufactured according to the same conditions as in example 1 except for the condition of a fluorine-compound gas content and sintering speed. The obtained porous glass soot was sintered in the atmosphere of the mixed gas, the fluorine-compound gas content of which was 6 Vol% with the sintering speed of 1.0 mm/min. However, the core having a GI type refractive index profile could not be obtained.

[Comparative Example 5]

A core of the glass base material was manufactured according to the same conditions as in example 1 except for the condition of the fluorine-compound gas content and the sintering speed. That is, the obtained porous glass soot was sintered in the atmosphere of the mixed gas, the fluorine-compound gas content of which was 1.6 Vol% with the sintering speed of 3.0 mm/min. However, the core having a GI type refractive index profile could not be obtained.

[Comparative Example 6]

A core of the glass base material was manufactured according to the same conditions as in example 1 except for the condition of the fluorine-compound gas content and the sintering speed. That is, the obtained porous glass soot was sintered in the atmosphere of the mixed gas, the fluorine-compound gas content of which was 2 Vol% with the sintering speed of 3.0 mm/min. However, the core having a GI type refractive index profile could not be obtained.

[Comparative Example 7]

A core of the glass base material was manufactured according to the same conditions as in example 1 except for the condition of the fluorine-compound gas content and the sintering speed. That is, the obtained porous glass soot was sintered in the atmosphere of the mixed gas, the fluorine-compound gas content of which was 6 Vol% with the sintering speed of 3.0 mm/min. However, the core having a GI type refractive index profile could not be obtained.

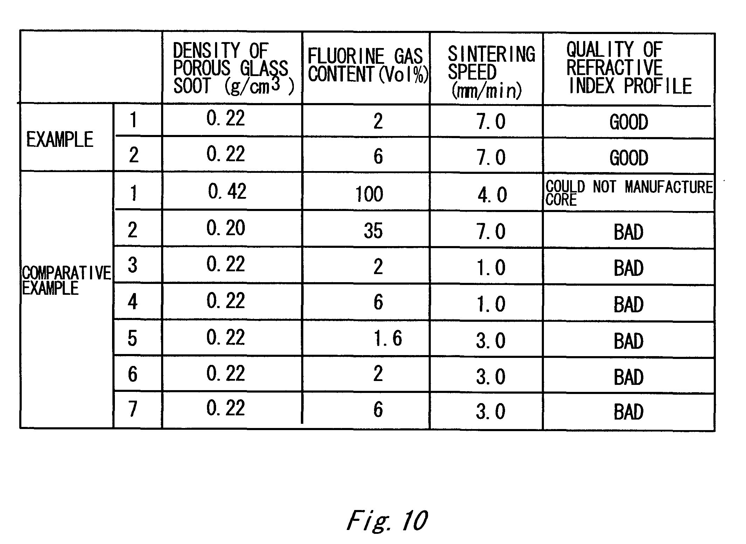

Fig. 10 shows a table that displays the results of examples 1 and 2, and the comparative examples 1 to 7 shown above. Each parameters of the fluorine-compound gas content, the sintering speed, and the quality of the refractive index profile are shown for each of the examples 1 and 2 and the comparative examples 1 to 7. If the desired GI type refractive index profile was obtained, the quality of the refractive index profile is shown as "good". If the desired GI type refractive index profile was not obtained, the quality of the refractive index profile was shown as "bad".

As shown in Fig. 10, in the case of examples 1 and 2, the core 36 of the glass base material had a desired GI type refractive index profile because the porous glass soot was sintered by controlling the fluorine-compound gas content within a range from 0.1 Vol% to 10 Vol% and controlling the sintering speed within a range from 5 mm/min to 10 mm/min.

Contrary, in the case of the comparative examples 1 to 7, the core of the glass base material did not have the GI type refractive index profile. In the case of the comparative examples 1 and 2, the fluorine-compound gas content was not within the range from 0.1 Vol% to 10 Vol%. In the case of the comparative examples 3 to 7, the sintering speed was not within a range from 5 mm/min to 10 mm/min. Thus, the core having the GI type refractive index could not be obtained in the comparative examples 1 to 7.

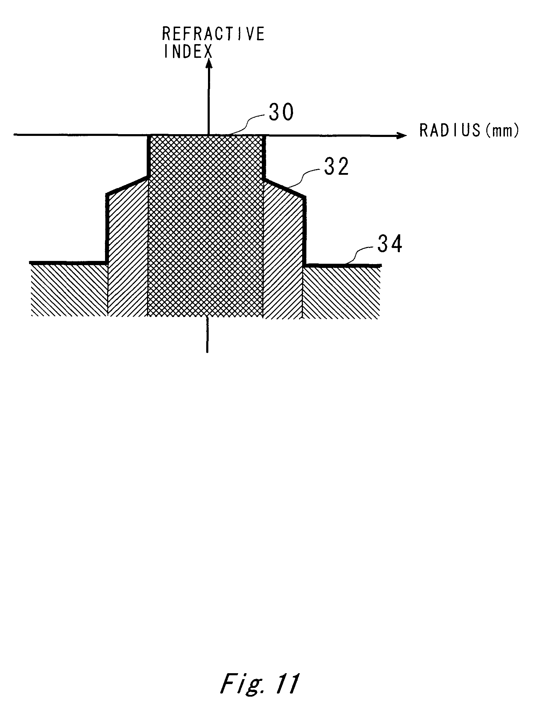

Fig. 11 shows an embodiment of a glass base material having a pseudo GI type refractive index profile. The glass base material shown in Fig. 11 has an inner core 30, an outer core 32, and a clad 34. The inner core 30 has a refractive index that is substantially the same as the refractive index of pure quartz. The absolute value of the difference of the refractive index between the inner core 30 and the pure quartz is 0.001 or smaller.

The outer core 32 is doped with fluorine. The outer core 32 has a refractive index that gradually decreases with a distance from a center of the inner core 30. The largest refractive index of the outer core 32 is smaller than the refractive index of the inner core 30. The clad 34 is doped with fluorine. The clad 34 has a substantially uniform refractive index, which is smaller than the smallest refractive index of the outer core 32.

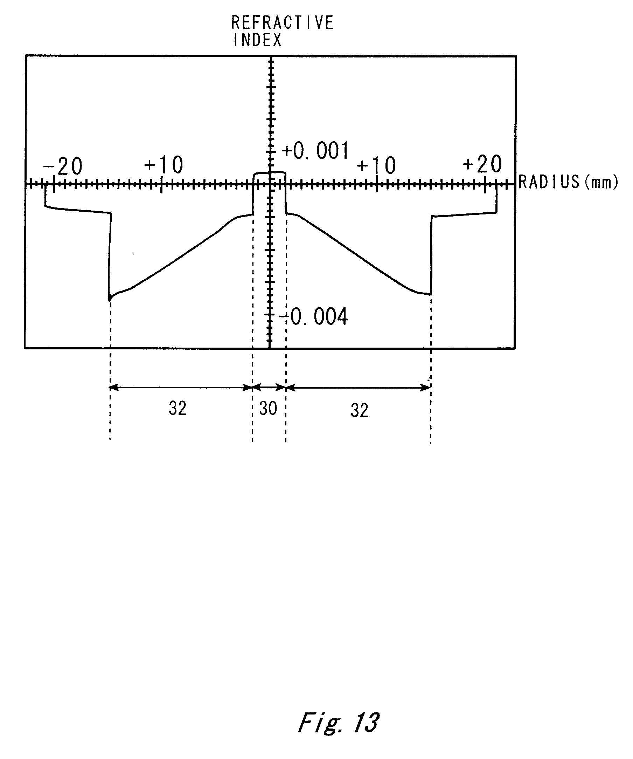

Because the inner core 30, the outer core 32,and the clad have a refractive index explained above, the glass base material shown in Fig. 13 reliably has a pseudo GI type refractive index profile. Therefore, the light that passes through the optical fiber, which is obtained by drawing the glass base material having a GI type refractive index profile shown in Fig. 13, has a higher beam strength than the beam strength of the light that passes through the SI type optical fiber.

Furthermore, because the inner core 30 is substantially the same as the pure quartz, the optical fiber drawn from the glass base material of the present embodiment has a high strength against the light that passes through the optical fiber. Moreover, because fluorine, not germanium, is doped into the outer core 32 and the clad 34, the strength against the light of the optical fiber of the present embodiment further increases.

In the following, a method for manufacturing a glass base material of the present embodiment will be explained. First, glass particles are accumulated on the starting rod 16 to form a porous glass soot 10 as shown in Fig. 3. Then, the obtained porous glass soot is dehydrated and sintered to become an inner core 30, which is substantially the same as pure quartz.

Next, the inner core 30 is elongated to a predetermined length and diameter. The glass particles 12 are then accumulated around the surface of the inner core 30 to form a porous glass soot that becomes an outer core 32.

In the same style as the embodiment explained in examples 1 and 2 and the comparative examples 1 to 7, the density of the porous glass soot is measured. If the density of the porous glass soot is recognized beforehand because the porous glass soot is manufactured under the predetermined condition, this recognizing process can be abbreviated. As explained in Fig. 3, the density of the porous glass soot is preferably in a range from 0.15 g/cm$^3$ to 1.0 g/cm$^3$ in order to form an outer core 32 having a GI type refractive index profile.

The sintering condition of a fluorine-compound gas content and a sintering speed is determined based on the measured density. The fluorine-compound gas content and the sintering speed are determined within a predetermined range as explained in examples 1 and 2 and the comparative examples 1 to 7. That is, the sintering speed is determined within a range from 5 mm/min to 10 mm/min, and the fluorine-compound gas content is determined within a range from 0.1 Vol% to 10 Vol%.

Then, the porous glass soot is sintered and vitrified in the atmosphere of mixed gas of inert gas and fluorine-compound gas to be an outer core 32. The fluorine-compound gas content and the sintering speed are controlled to a determined value during the sintering process.

The above sintering process dopes the fluorine into the outer core 32 such that the refractive index of the outer core 32 gradually decreases with a distance from a center of the inner core 30. The amount of fluorine doped into the outer core 32 is largest at the surface of the outer core 32. The amount of fluorine doped into the outer core 32 gradually decreases with the decrease of distance from the center of the inner core 30. The inner core 30 is substantially not doped with the fluorine. Therefore, controlling the fluorine-compound gas content and the sintering speed can obtain the refractive index profile shown in Fig. 11.

Furthermore, a desired refractive index profile can be obtained by changing the ratio of the volume between the inner core 30 and the outer core 32. Changing the thickness of the outer core formed on the inner core 30 can change the ratio of the volume between the inner core 30 and the outer core 32.

Next, the glass particles are accumulated on the outer core 32 to form a porous glass soot that becomes a clad 34. The porous glass soot is sintered and vitrified in the atmosphere of the fluorine-compound gas to become a clad 34. As an example of the fluorine-compound gas atmosphere, an atmosphere containing 100 Vol% of $SiF_4$ gas is included. To stabilize the characteristic of the optical fiber, the refractive index profile of the clad 34 is preferably substantially uniform.

[EXAMPLE 3]

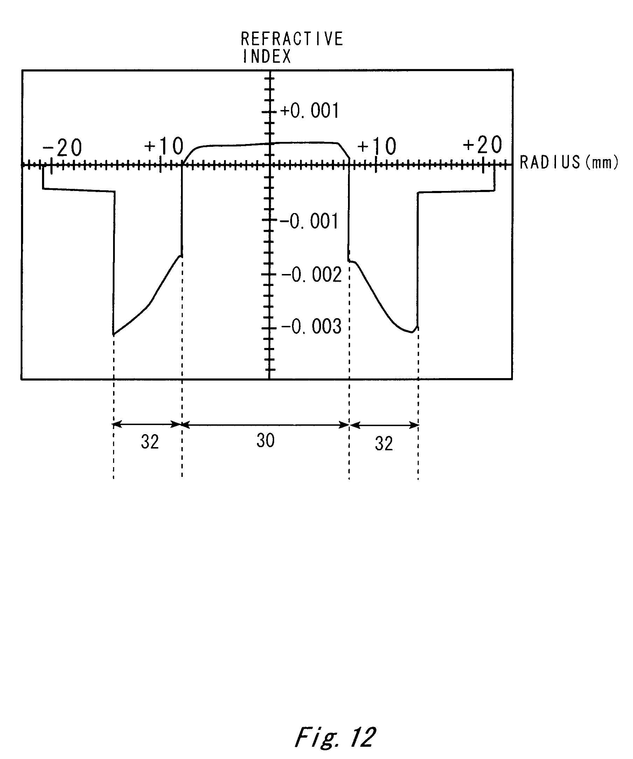

Fig. 12 shows an example of a refractive index profile of the inner core 30 and the outer core 32 of the glass base material manufactured by the present embodiment. The process for manufacturing the inner core 30 and outer core 32 of the glass base material having a refractive index profile shown in Fig. 12 will be explained below.

First, a porous glass soot was manufactured by the VAD method. The porous glass soot was dehydrated, sintered, and vitrified to form an inner core composed of pure quartz. The inner core was elongated so that the inner core had a diameter of 15 mm. The difference of the refractive index between the inner core and pure quartz was +0.0004.

Then, glass particles were accumulated on the surface of the inner core using the OVD method. The accumulated glass particles were sintered in an atmosphere of mixed gas that contains fluorine compound gas. To make an atmosphere of mixed gas, helium gas and a gas containing a fluorine compound were introduced into the furnace of the sintering apparatus. At this time, the flow rate of the helium gas was 4.9 L/min, and the flow rate of the $SiF_4$ gas was 0.1 L/min. Thus, the fluorine-compound gas content of the atmosphere of the mixed gas was 2 Vol%. The sintering speed was set to 7.0 mm/min. Then, the porous glass soot was sintered according to the sintering condition explained above.

As shown in Fig. 12, the core of the glass base material manufactured by the above-mentioned process had a pseudo GI type refractive index profile.

Next, the glass particles were accumulated on the outer core using the OVD method. Then, the accumulated glass particles were sintered and vitrified in the atmosphere of the $SiF_4$, the fluorine-compound gas content of which is 100 Vol%, to be a clad. Then, the glass base material was obtained.

The manufactured glass base material was drawn to an optical fiber, which was used for a high-power laser guide fiber. Because the core of this optical fiber had a pseudo GI type refractive index profile as shown in Fig. 12, the beam strength of the light that passed through the optical fiber was high. Furthermore, because the inner core has a refractive index substantially the same as the pure quartz, the strength against the light was also high. Especially because the area dominated by the inner core is large, the optical fiber has a high strength against the light.

[EXAMPLE 4]

Fig. 13 shows another example of the refractive index profile of the inner core and the outer core of the glass base material. The process for manufacturing the inner core and the outer core of the glass base material having a refractive index profile shown in Fig. 13 will be explained below.

An inner core and an outer core of the porous glass soot were manufactured according to the same conditions as in example 3 except for the diameter of the inner core and the thickness of the outer core. The diameter of the inner core of example 4 was made smaller than the diameter of the inner core of example 3. Also, the thickness of the outer core of example 4 was made larger than the thickness of the outer core of example 3.

As shown in Fig. 13, the refractive index profile of the obtained core was pseudo GI type. The region dominated by the inner core of example 4 is smaller than that of the inner core of example 3.

The manufactured glass base material was drawn to an optical fiber, which was used for a high-power laser guide fiber. Because the core of this optical fiber had a pseudo GI type refractive index profile as shown in Fig. 13, the beam strength density of the light that passed through the optical fiber was high. Furthermore, because the inner core has a refractive index substantially the same as the pure quartz, the strength against the light was high. Especially because the optical fiber drawn from the glass base material of example 4 has a refractive index profile similar to the GI type, the beam strength was high.

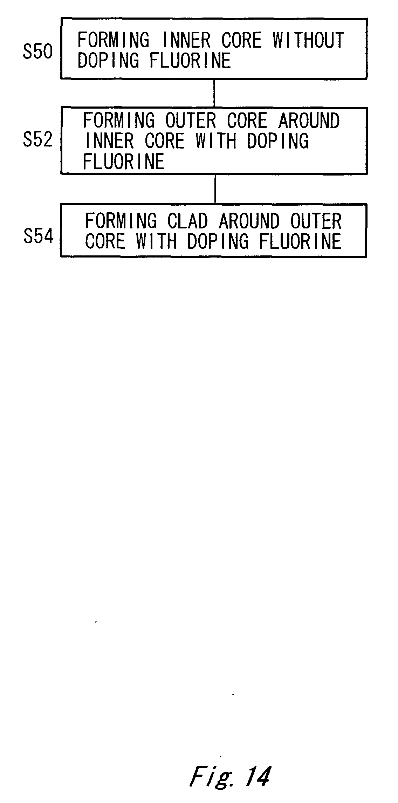

Fig. 14 shows a flow chart of manufacturing the glass base material of the present embodiment shown in example 3 and example 4.

First, the inner core is formed without being doped with fluorine (S50). Therefore, the inner core was substantially the same as pure quartz. Then, the outer core doped with fluorine is formed around the inner core (S52). The outer core is doped with fluorine such that the amount of the doped fluorine increases with the distance from the center of the inner core. Therefore, the outer core has a GI type refractive index profile. Finally, the clad doped with fluorine is formed around the outer core (S54). The fluorine is doped into the clad uniformly so that the clad has a substantially uniform refractive index profile for the entire area of the clad.

Although the present invention has been described by way of exemplary embodiments, it should be understood that many changes and substitutions may be made by those skilled in the art without departing from the spirit and the scope of the present invention which is defined only by the appended claims.

**Claims**

1. A method for manufacturing a glass base material, which is a base material of an optical fiber, comprising: forming a core (36) of said glass base material; said forming said core (36) including: accumulating glass particles (12) on a starting rod (16) to form a porous glass soot (10); and forming a clad (38) of said glass base material around said core (36);
characterized in that said forming said core (36) further includes: sintering said porous glass soot (10) in an atmosphere of mixed gas containing fluorine-compound gas to form a GI type refractive index profile, the refractive index of which gradually decreases with a distance from a center of said core (36).

2. A method as claimed in claim 1, characterized in that: said sintering said porous glass soot controls a fluorine-compound gas content in said atmosphere of said mixed gas and a sintering speed for sintering said porous glass soot to form said GI type refractive index profile.

3. A method as claimed in claim 2, characterized in that said method further comprising: recognizing a density of said porous glass soot (10); determining said fluorine-compound gas content in said mixed gas based on said recognized density of said porous glass soot (10); and determining said sintering speed based on said recognized density of said porous glass soot (10) ; wherein: said sintering sinters said porous glass soot (10) according to said determined fluorine-compound gas content and said determined sintering speed.

4. A method as claimed in claim 1, characterized in that said accumulating said glass particles (12) forms said porous glass soot (10) having a density in a range from 0.15 g/cm$^3$ to 1.0 g/cm$^3$.

5. A method as claimed in claim 4, characterized in that said accumulating said glass particles (12) forms said porous glass soot (10) having a density in a range from 0.15 g/cm$^3$ to 0.4 g/cm$^3$.

6. A method as claimed in claim 2, characterized in that said sintering said porous glass soot (10) controls said fluorine-compound gas content within a range from 0.1 Vol% to 10 Vol%.

7. A method as claimed in claim 2, characterized in that said sintering said porous glass soot (10) controls said sintering speed within a range from 5 mm/min to 10 mm/min.

8. A method as claimed in claim 1, characterized in that said accumulating said glass particles (12) hydrolyzes and accumulates silicon tetrachloride on said starting rod (16).

9. A method as claimed in claim 1, characterized in that said forming said core further includes forming an inner core (30), a refractive index of which is substantially the same as a refractive index of pure quartz, inside said core (32).

10. A glass base material, which is a base material of an optical fiber, characterized in that said glass base material comprises: a fluorine-doped core (36) which has a GI type refractive index profile that gradually decreases with a distance from a center of said fluorine-doped core (36); and a fluorine-doped clad (38) having a substantially uniform refractive index profile.

11. A glass base material as claimed in claim 10, further comprising: an inner core (30), a refractive index of which is substantially the same as a refractive index of pure quartz, inside said fluorine-doped core (32, 36).

12. A glass base material as claimed in claim 11, characterized in that the highest refractive index of said fluorine-doped core (32) is smaller than said refractive index of said inner core (30).

13. A glass base material as claimed in claim 12, characterized in that a refractive index of said fluorine-doped clad (34) is smaller than the lowest refractive index of said fluorine-doped core (32).

14. A glass base material as claimed in claim 11, characterized in that an absolute value of a difference of a refractive index between said inner core (30) and said pure quartz is 0.001 or smaller.

15. An optical fiber, characterized in that said optical fiber comprises: a fluorine-doped core (36) which has a GI type refractive index profile that gradually decreases with a distance from a center of said fluorine-doped core (36); and a fluorine-doped clad (38) having a substantially uniform refractive index profile.

16. An optical fiber as claimed in claim 15, characterized in that said optical fiber further comprises: an inner core (30), a refractive index of which is substantially the same as a refractive index of pure quartz, inside said fluorine-doped core (32, 36).

17. An optical fiber as claimed in claim 16, characterized in that the highest refractive index of said fluorine-doped core (32) is smaller than said refractive index of said inner core (30).

18. An optical fiber as claimed in claim 17, characterized in that a refractive index of said fluorine-doped clad (34) is smaller than the lowest refractive index of said fluorine-doped core (32).

19. An optical fiber as claimed in claim 16, characterized in that an absolute value of a difference of a refractive index between said inner core (30) and said pure quartz is 0.001 or smaller.

20. An optical fiber as claimed in any one of claims 15 through claim 19, characterized in that said optical fiber is an optical fiber for a high power laser.

21. An optical fiber as claimed in claim 20, characterized in that said high power laser is a YAG laser.

(a) REFRACTIVE INDEX

RADIUS

CORE

CLAD    CLAD

RELATED ART
Fig. 1A

(b) REFRACTIVE INDEX

RADIUS

CORE

CLAD    CLAD

RELATED ART
Fig. 1B

POWER
DENSITY

d1

RELATED ART
Fig. 2B

POWER
DENSITY

d1

RELATED ART
Fig. 2A

16

10

12

14

$SiCl_4$
$O_2$
$H_2$

*Fig. 3*

EXHAUSTED
GAS

22

10

18

20

SiF4
He
Cl2

*Fig. 4*

S14 | FORMING POROUS GLASS SOOT

S16 | MEASURING DENSITY OF POROUS GLASS SOOT

S18 | DETERMINING FLUORINE-COMPOUND GAS CONTENT AND SINTERING SPEED BASED ON MEASURED DENSITY

S20 | SINTERING POROUS GLASS SOOT ACCORDING TO DETERMINED FLUORINE-COMPOUND GAS CONTENT AND SINTERING SPEED

S22 | ELONGATING SINTERED POROUS GLASS SOOT( CORE)

S24 | FORMING CLAD AROUND CORE

S26 | SINTERING CLAD ACCORDING TO DETERMINED FLUORIN-COMPOUND GAS CONTENT AND SINTERING SPEED

*Fig. 5*

Fig. 6

*Fig. 7*

Fig. 8

REFRACTIVE
INDEX

Fig. 9

| | | DENSITY OF POROUS GLASS SOOT $(g/cm^3)$ | FLUORINE GAS CONTENT (Vol%) | SINTERING SPEED $(mm/min)$ | QUALITY OF REFRACTIVE INDEX PROFILE |
|---|---|---|---|---|---|
| EXAMPLE | 1 | 0.22 | 2 | 7.0 | GOOD |
| | 2 | 0.22 | 6 | 7.0 | GOOD |
| COMPARATIVE EXAMPLE | 1 | 0.42 | 100 | 4.0 | COULD NOT MANUFACTURE CORE |
| | 2 | 0.20 | 35 | 7.0 | BAD |
| | 3 | 0.22 | 2 | 1.0 | BAD |
| | 4 | 0.22 | 6 | 1.0 | BAD |
| | 5 | 0.22 | 1.6 | 3.0 | BAD |
| | 6 | 0.22 | 2 | 3.0 | BAD |
| | 7 | 0.22 | 6 | 3.0 | BAD |

*Fig. 10*

EP 1 120 382 A2

*Fig. 11*

Fig. 12

*Fig. 13*

S50 | FORMING INNER CORE WITHOUT DOPING FLUORINE

S52 | FORMING OUTER CORE AROUND INNER CORE WITH DOPING FLUORINE

S54 | FORMING CLAD AROUND OUTER CORE WITH DOPING FLUORINE

*Fig. 14*